# EUROPEAN PATENT SPECIFICATION

(11) **EP 3 982 057 B1**
(45) Date of publication and mention of the grant of the patent: **21.05.2025**
(21) Application number: 21200626.6
(22) Date of filing: 04.10.2021
(51) Int. Cl.: F24H 15/104, F24H 15/395, F16K 17/00

(54) **HOT WATER HEATING DEVICE**
WARMWASSERHEIZVORRICHTUNG
DISPOSITIF DE CHAUFFAGE DE L'EAU CHAUDE

(30) Priority: 09.10.2020 SK 1722020
(43) Date of publication of application: 13.04.2022
(73) Proprietor: Vaillant GmbH, 42859 Remscheid (DE); Protherm Production s.r.o., 909 01 Skalica (SK)
(72) Inventor: Kovár, Stanislav, 906 31 Hlboké (SK)
(74) Representative: Popp, Carsten

(56) References cited:
- EP-A1- 3 428 546
- EP-A2- 1 160 515
- WO-A1-01/84026
- WO-A1-2012/140584
- KR-A- 20030 040 826

## Description

### Field of the invention

The invention relates to a hot water heating device with means for monitoring, recording and evaluating the states of a bypass valve.

### Background of the invention

In the prior state of the art, heating devices are known, in particular hot water boilers, with a primary source of water heating (gas, electric, solar, heat pump system), with a water circulation pump and with one or more heating circuits.

One heating circuit is usually intended for space heating and another heating circuit is intended for domestic hot water heating. In both cases, the heated water is supplied via a common primary heat exchanger and, in the case of domestic hot water heating, subsequently distributed also to a secondary heat exchanger.

A heating device is equipped with a number of valves to ensure the correct circulation of heated water; pressure and temperature sensors, flow meters and protective elements are used to ensure the control of the boiler and its correct function.

Most of these elements are connected to the control unit of the heating device, equipped with a microcomputer and memory means via electronic and electrical communication means.

The interconnection of the components of the heating device is thus provided by electronic and electrical communication means, including connectors, wires and local data buses.

The best-known bus standards used for communication in heating systems and in so-called smart systems for buildings and homes are: M-bus, Modbus, CAN-bus, KM-bus, KNX-bus, C-bus, CE-bus and LIN-bus. The use of an eBUS (Energy BUS), a two-wire serial digital communication interface, has expanded in heating and solar-powered systems.

The LIN-bus (Local Interconnect Network) is a three-wire serial bus with one data wire, developed for use in the automotive industry by extending the ISO 9141 standard. The data is transmitted by one wire, the other two wires are used to supply the bus connection nodes. In heating technology, it is used as a local bus, especially for communication of a control unit with sensors, but also with actuators, such as circulation pump motors. In the bus hierarchy, the LIN bus is at the lowest level and communication with the control unit (control computer) of the heating device is ensured, for example, via a master CAN bus (Controller Area Network) using a converter between the CAN bus and the LIN bus. Other solutions in which the lowest level communication is mediated by the LIN bus are also possible.

A three-way valve is used to switch water supply to the particular heating circuits. The three-way valve is controlled by a motor (usually a stepper motor) and the control unit communicates with it to ensure switching of the heating circuits.

In the prior state of the art systems, a separate bypass valve is moreover used to prevent damage to the heating device caused either by high pressure differences (henceforth referred to as "differential pressures") occurring in the system of radiators and their thermostats or in an emergency shutdown of the system. The bypass valve is used for permanent pressurization of water between the heating device inlet and outlet.

When the bypass valve is set to a certain differential pressure, it performs a protective function in such a manner that, if the space heating apparatus suddenly closes, for example due to the emergency state of a radiator, in full operation of the heating device transferring heat solely to the space heating circuit, the bypass valve responds to the sudden rise in the differential pressure and, when reaching the set differential pressure value, it releases heated water through the bypass valve. The bypass valve then discharges heated water from the primary heat exchanger inside the heating device until, using its own protective elements, the heating device evaluates the state, responds and shuts off the heating mode; in the existing heating devices the timing is approximately five seconds. This heating water discharge inside the device protects the primary heat exchanger against potential overheating and destruction.

If the bypass valve is adjusted to a lower differential pressure than optimal, the heated water is routed partially and not efficiently also through the bypass valve and the heating device becomes less effective.

If the bypass valve is set to a higher differential pressure than desired, then the pump feeds an inadequate amount of heated water to the heating circuit, thereby creating noise caused by pumping of the inadequate amount of heated water through small diameter openings in the thermostatic valves of the radiators. Not enough heated water is discharged and the control unit responds by frequent switching off the heating in order to protect the primary heat exchanger against overheating, and so the heating device becomes less effective.

Since every heating system is unique, characterized by a different number of radiators, filters and other additional equipment, setting of the bypass valve needs to be adapted so that the heating device is able to operate as efficiently as possible.

The bypass valve is basically a simple mechanical component, the main part of which is a spring with a preset preload, which corresponds to the differential pressure for a particular heating system.

The bypass valve can be made as a separate valve or it can be integrated into a three-way valve; such solutions are known in the prior state of the art and used by the manufacturers of heating devices. Both valves are built into one body and have interconnected inlets and outlets, the operation of the three-way diverter valve being controlled by a drive (e.g. a stepper motor) and the bypass valve being controlled by the pressure of the medium acting on the spring. The inlet of the bypass valve is connected to the bypass duct.

In the prior state of the art, the three-way valves with an integrated bypass valve intended for applications in the field of heating technology are disclosed in documents WO01/84026 A1 (Honeywell) and TR200708018 A2 (TÜRK DEMIR DÖKÜM). Both above three-way valves act as a diverter valve in a heating device and integrate a bypass valve to provide protection for the primary exchanger. The bypass valve in both documents is equipped with a spring.

The bypass valve is set to a certain differential pressure value during the first installation of the heating device (for example by means of a screw compressing the spring) and every other setting of the spring preload is also performed manually, during servicing.
The document EP 3 428 546 A1 (Vaillant GmbH, Protherm Production s.r.o.) discloses a three-way valve with an integrated bypass valve of an improved construction. The required differential pressure of the heating system is set on the spring of the electronically controlled bypass valve integrated in the three-way valve, and the valve thus set is connected in a system with one or two heating circuits.
The differential pressure is electronically adjustable by the same electric drive that electronically controls the three-way valve.
During the operation of the device, the desired differential pressure of the heating system can be adjusted electronically by changing the spring bias of the bypass valve integrated into the three-way valve without the need for physical replacement of the spring.

The disadvantage of the current state of the art is that the operation of the bypass valve in the heating device is not monitored and recorded, the control unit does not have the necessary information on the frequency and duration of the bypass states. As a result, the service technician does not have information from the heating system that could be used to optimize the performance of the heating device (setting a lower or higher differential pressure by preloading the bypass valve spring).

Such information could also be used by the control unit, for example, in the case, when a failure of the bypass valve occurs.

Disadvantage of the state of art is eliminated by the presented invention. A heating device with means for monitoring and recording the states of the bypass valve provides better possibilities for both manual and automated optimization of the heating system in which the heating device is installed.

### Summary of the invention

The hot water heating device comprises a heat exchanger connected to a water heating source, a circulation pump, a three-way valve for switching heating water circuits, being equipped with an integrated bypass valve to protect the heating system from damage, a control unit equipped with a processor and memory means and electrical and electronic communication means.

The bypass valve is equipped with an opening for water inlet, an opening for water outlet, between which a movable piston with a sealing surface is arranged, and a spring is arranged on the valve stem, the preload of which is set by a screw to the required differential pressure value. A permanent magnet (for example in the form of a ring) is placed on the valve piston.

The bypass valve is closed in the normal operating state and opens when the differential pressure corresponding to the set spring preload is reached.

In the magnetic field of the permanent magnet there is an electronic module equipped with a Hall sensor for sensing the position of the piston. The electronic module can preferably be part of the control unit of the heating device.

When the differential pressure in the system reaches the limit value for the bypass function, the piston moves and the permanent magnet moves together with it. The change in the magnetic field is sensed by the Hall sensor and the output of the Hall sensor is connected to the control unit by the electrical and electronic communication means.

lt is possible to use a standard data bus, preferably a LIN bus, to connect the outputs from the sensor to the control unit.

The signal transmitted by the Hall proximity sensor informs the control unit of the heating device about the position of the bypass valve piston and the resulting instantaneous flow through the valve.

The states of the bypass valve can be transmitted and together with the current time data recorded to the memory of the control unit by the local data bus and they can be used subsequently, e.g. to graphically display and evaluate the time history of the bypass valve conditions.

By such a connection, a state when the valve is clogged with impurities and is inoperative and therefore not fulfilling its protective function is also detected. This information, together with other monitored values, helps the service technician to assess the fault condition better.

By the communication means, the control unit can then provide information on the status of the heating device via the user interface to the service technician on their displaying device via a wireless connection or via a special reading device connected by a cable to the corresponding connector of the control unit. Any suitable user interface can be used.

Such a procedure is particularly advantageous during the inspection following the first installation of the device in a building, in order to optimize the operation of the device.

The records of the operation of the bypass valve can also be used by the control unit of the heating device automatically with the help of software to change the heating system control.

Using the control software, the control unit can adjust, for example, the output of the primary heating source or the output of the water circulation pump on the basis of the status records of the bypass valve. If the recorded bypass valve operation data indicates a bypass valve failure (its inactivity), the control unit can start flushing the system by the circulation pump.

### Brief description of drawings

The invention is explained in more detail with the help of drawings, but without limitation to them. They show:

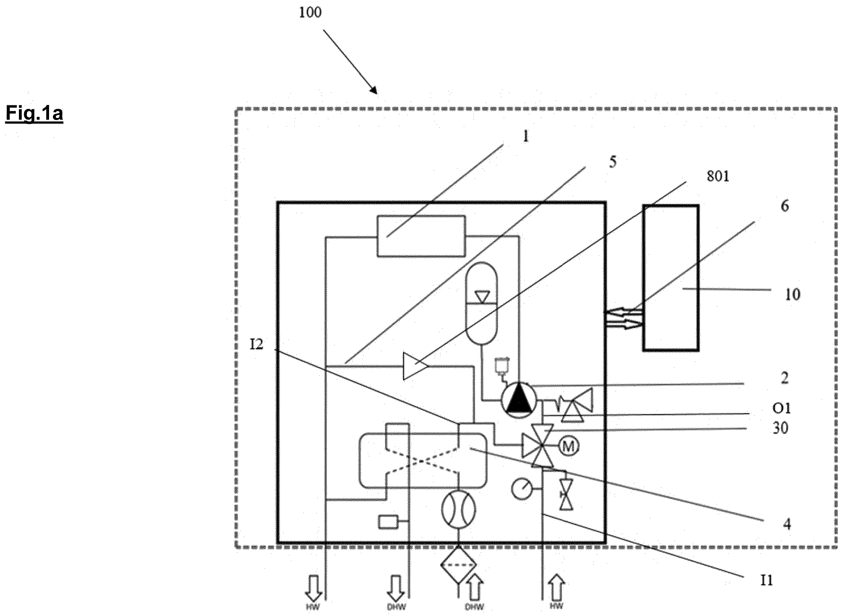

Fig. 1a A wiring diagram of a heating device intended for space heating and domestic hot water preparation, in which the bypass valve is arranged as a separate component in the bypass duct and two inlet ducts and one outlet duct of a motor-controlled three-way valve are marked.

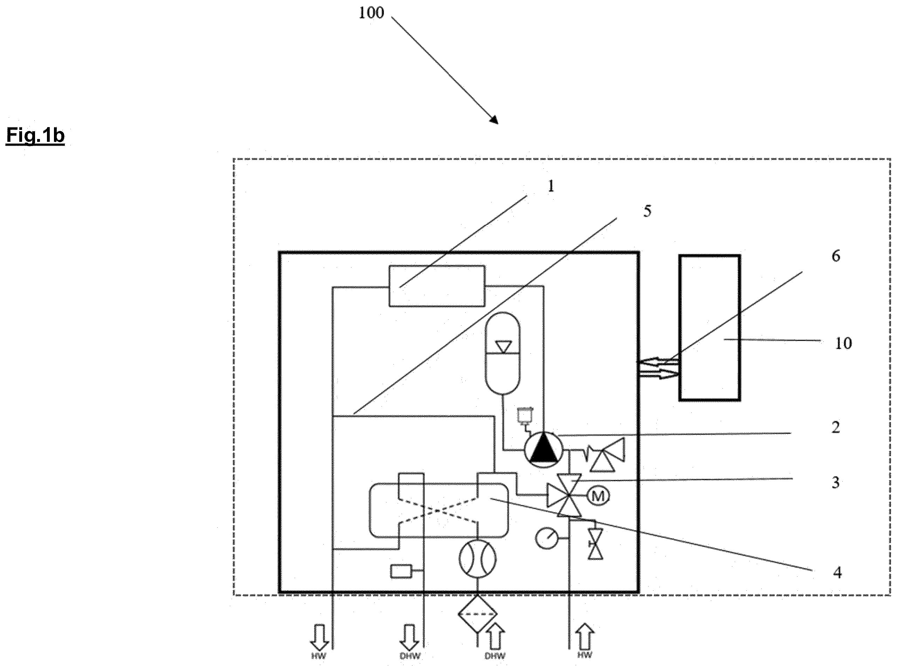

Fig. 1b A diagram of a typical connection of a heating device intended for space heating and domestic hot water preparation, with a bypass duct and with a motor-controlled three-way valve, with an integrated bypass valve according to the presented invention
Figure 1b illustrates the presented invention and Figure 1a is intended to help understand the integration of the bypass valve into the three-way valve.
Fig. 2 Illustration of a part of the body of a motor-controlled three-way valve with an integrated bypass valve and with an electronic module attached
Fig. 3 Cross-section of a bypass valve integrated into the body of a motor-controlled three-way valve (the body is shown only partially) with construction details of the bypass valve
Fig. 4 The example of a motor-controlled three-way valve embodiment with the indicated location of the integrated bypass valve in the body of the three-way valve.

### Description of the embodiment example

To understand the integration of the bypass valve, Figure 1a shows a circuit diagram of a heating device 100 intended for space heating and domestic hot water heating preparation comprising a separate bypass valve 801 and a motor-controlled three-way diverter valve 30. The bypass valve 801 is arranged as a separate component in the bypass duct 5, and the diagram shows two inlet ducts I1 and I2 and one outlet duct O1 for connecting the motor-controlled three-way diverter valve 30. The motor-controlled three-way diverter valve 30 has two inlets and one outlet, one inlet being connected to duct I1, the other inlet being connected to duct I2 and the outlet being connected to duct O1.

The solution according to the diagram in Figure 1a is in the state of the art improved by a device according to diagram 1b, where a separate bypass valve 801 and a motor-controlled three-way diverter valve 30 are replaced by a motor-controlled three-way diverter valve 3 with a bypass valve 80 integrated in the three-way valve body 3.

The hot water heating device 100 for space heating and domestic hot water preparation includes a motor-controlled three-way diverter valve 3 with an integrated bypass valve 80, the heating device 100 also comprises a primary heat exchanger 1 connected to a heating source, secondary heat exchanger 4, circulation pump 2, bypass duct 5, control unit 10, electrical and electronic communication means 6.

The heating device 100 also includes sensors, valves, and safety components that are well known to professionals in the state of the art and will not be described in detail.

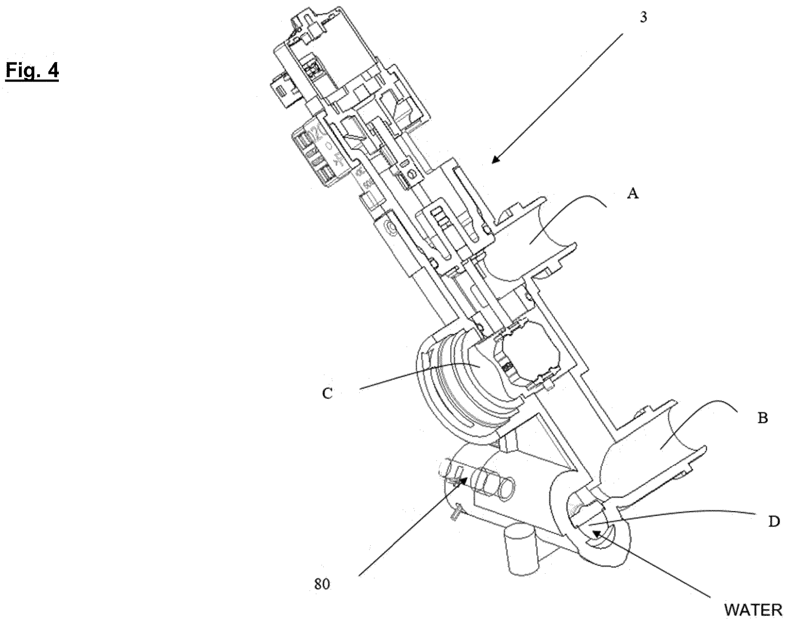

The three-way valve 3 is intended for switching the heating circuits of the heating device 100 and the bypass valve 80 is integrated in its body by built-in connections and openings. Fig. 4 shows an example of the arrangement of a motor-controlled three-way diverter valve 3 with the indicated location of an integrated bypass valve 80 in the body of the three-way valve.

The bypass valve 80 is equipped with a connector D for water inlet from the bypass duct 5. The three-way diverter valve 3 has inlet connectors A and B and an outlet connector C. The inlet connector B of the three-way valve 3 and the connector D of the bypass valve 80 are connected to a common internal duct in the body of the three-way valve 3, and during operation the flows from the particular circuits are led through the connectors A or B of the three-way diverter valve, and the flow from the bypass duct 5 connected to the connector D is directed to the output C of the motor-controlled three-way diverter valve 3 depending on the pressure conditions of the system.

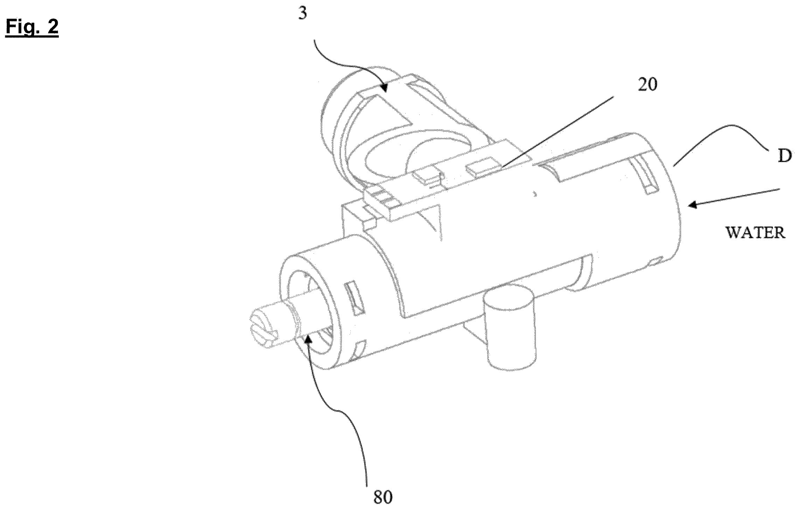

Figure 2 shows a part of the plastic body of a three-way diverter valve 3 with an integrated bypass valve 80 and with an electronic module 20 attached.

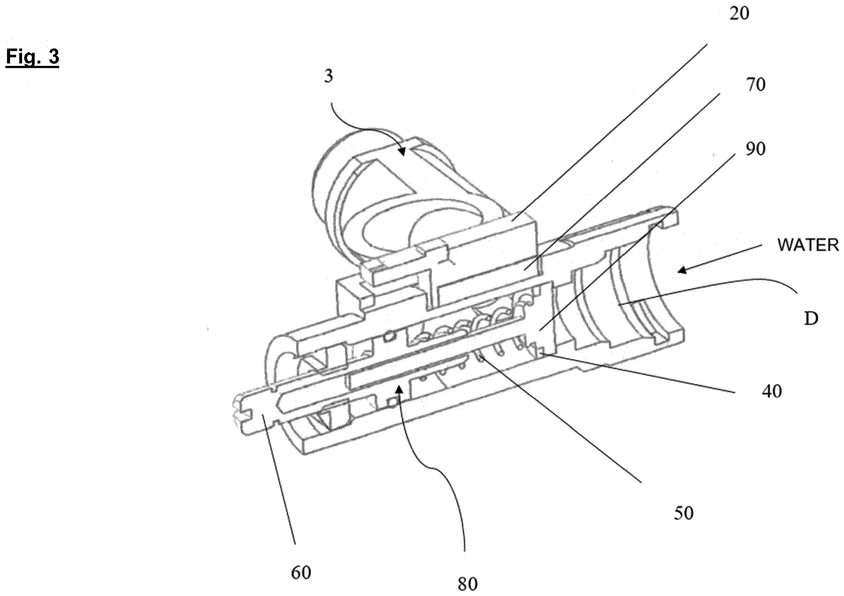

Figure 3 shows the plastic body from Figure 2 and a cross section of the bypass valve 80. The bypass valve 80 is equipped with a connector D for water inlet from the bypass duct 5 and a water outlet opening (not shown), between which a movable piston 90 with a sealing surface is arranged; a permanent magnet 40 is placed on the piston 90, a spring 50 is arranged on the valve stem and the spring preload is set to the value of the differential pressure in the heating system. The bypass valve 80 is closed in a normal operating state, the spring 50 keeps the piston 90 in a position preventing the flow of water from the inlet to the bypass valve 90 to its outlet connected to outlet C of the three-way diverter valve 3.

The preload of the spring 50 is set by a screw 60.

When the differential pressure in the system reaches the limit value for the bypass function, the piston 90 moves and the permanent magnet 40 moves together with it.

Within the magnetic field of the permanent magnet 40, an electronic module 20 is placed on the body of the three-way valve 3, comprising a Hall proximity sensor 70 and circuits evaluating the signals generated by the Hall proximity sensor 70.

The change in the magnetic field induced by the movement of the magnet is sensed by the Hall proximity sensor 70, and the output from the Hall proximity sensor 70 provides the control unit with information about the states of the bypass valve 80.

The electronic module 20 includes a Hall proximity sensor 70 and circuits for evaluating the signals generated by the Hall proximity sensor 70. The signals generated by the Hall proximity sensor 70 are further evaluated by electronic circuits and transmitted via electrical and electronic communication means 6 to the control unit 10. In the control unit 10, the transmitted data is recorded in the memory means of the control unit 10.

The control unit 10 is equipped with control software and/or a user interface for evaluating the states of the bypass valve 80. In the preferred embodiment, the electronic module 20 is part of the control unit 10.

The electrical and electronic communication means 6 comprise a local data bus, connectors, cable connections or wireless connections. In the preferred embodiment, the electrical and electronic communication means 6 comprise a local LIN-bus.

### List of reference marks

100 - heating device
1 - primary heat exchanger
2 - circulation pump
3 - motor-controlled three-way valve with an integrated bypass valve
4 - secondary heat exchanger
5 - bypass duct
6 - communication means
10 - heating device control unit
20 - electronic module
40 - permanent magnet
50 - spring
60 - screw
70 - Hall sensor
80 - bypass valve
90 - piston
   A - three-way diverter valve inlet connector
   B - three-way diverter valve inlet connector
   C - three-way diverter valve outlet connector
   D - bypass valve inlet connector
      I1 - inlet duct
      I2 - inlet duct
      O1 - outlet duct
      30 - motor-controlled three-way diverter valve
      801 - separate bypass valve

## Claims

1. A hot water heating device (100) for space heating and domestic hot water preparation, comprising
a primary heat exchanger (1) connected to a heating source,
a circulation pump (2),
a secondary heat exchanger (4),
a motor-controlled three-way diverter valve (3) for switching the heating water circuits being equipped with an integrated bypass valve (80) connected to a bypass duct (5),
electrical and electronic communication means (6),
**characterized in that,**
a permanent magnet (40) is arranged on a movable piston (90) of the bypass valve (80),
an electronic module (20) comprising a Hall proximity sensor (70) is placed within the magnetic field of the permanent magnet (40) and the electronic module (20) is connected to the electrical and electronic communication means (6),
a control unit (10),
the electrical and electronic communication means (6) are arranged to transmit signals from the Hall proximity sensor (70) to the control unit (10),
the control unit (10) is equipped with a processor and memory means for recording signals from the Hall proximity sensor (70),
the control unit (10) is equipped with control software and/or a user interface for evaluating the states of the bypass valve (80) from the recorded signals from the Hall proximity sensor (70).

2. A hot water heating device (100) according to Claim 1,
**characterized in that**
the electronic module (20) is arranged on the body of the three-way diverter valve (3).

3. A hot water heating device (100) according to Claim 1,
**characterized in that**
the electronic module (20) is a part of the control unit (10).

4. A hot water heating device (100) according to any of claims 1 to 3,
**characterized in that**
electrical and electronic communication means (6) comprise a local LIN-bus.

## Patentansprüche

1. Warmwasserheizgerät (100) für Raumheizung und Brauchwasserbereitung, mit
einem Primärwärmetauscher (1), der mit einer Heizquelle verbunden ist,
einer Umwälzpumpe (2),
einem Sekundärwärmetauscher (4),
einem motorgesteuerten Drei-Wege-Umschaltventil (3) zum Umschalten der Heizwasserkreisläufe, das mit einem integrierten Bypass-Ventil (80) ausgestattet ist, das an eine Bypass-Leitung (5) angeschlossen ist,
elektrischen und elektronischen Kommunikationsmitteln (6), **dadurch gekennzeichnet, dass,**
ein Permanentmagnet (40) auf einem beweglichen Kolben (90) des Bypass-Ventils (80) angeordnet ist, ein elektronisches Modul (20) mit einem Hall-Näherungssensor (70) im Magnetfeld des Permanentmagneten (40) angeordnet ist und das elektronische Modul (20) mit den elektrischen und elektronischen Kommunikationsmitteln (6) verbunden ist, eine Steuereinheit, die elektrischen und elektronischen Kommunikationsmittel (6) so angeordnet sind, dass sie Signale vom Hall-Näherungssensor (70) an eine Steuereinheit (10) übertragen, die Steuereinheit (10) mit einem Prozessor und Speichermitteln zum Aufzeichnen von Signalen vom Hall-Näherungssensor (70) ausgestattet ist und die Steuereinheit (10) mit einer Steuersoftware und/oder einer Benutzeroberfläche zur Auswertung der Zustände des Bypassventils (80) aus den erfassten Signalen des Hall-Näherungssensors (70) ausgestattet ist.

2. Warmwasserheizgerät (100) nach Anspruch 1,
**dadurch gekennzeichnet, dass**
das Elektronikmodul (20) auf dem Gehäuse des Dreiwege-Umschaltventils (3) angeordnet ist.

3. Warmwasserheizgerät (100) nach Anspruch 1,
**dadurch gekennzeichnet, dass**
das Elektronikmodul (20) ein Teil der Steuereinheit (10) ist.

4. Warmwasserheizgerät (100) nach einem der Ansprüche 1 bis 3,
**dadurch gekennzeichnet, dass**
die elektrischen und elektronischen Kommunikationsmittel (6) einen lokalen LIN-Bus umfassen.

## Revendications

1. Dispositif de chauffage d'eau chaude (100) pour le chauffage de locaux et la préparation d'eau chaude sanitaire, comprenant
un échangeur de chaleur primaire (1) relié à une source de chauffage,
une pompe de circulation (2),
un échangeur de chaleur secondaire (4),
une vanne de répartition motorisée à trois voies (3) pour une commutation des circuits d'eau de chauffage, étant équipée d'une vanne de dérivation intégrée (80) reliée à un conduit de dérivation (5), des moyens de communication électrique et électronique (6),
**caractérisé en ce que,**
un aimant permanent (40) est agencé sur un piston mobile (90) de la vanne de dérivation (80),
un module électronique (20) comprenant un capteur de proximité à effet Hall (70) est placé dans le champ magnétique de l'aimant permanent (40), et le module électronique (20) est connecté aux moyens de communication électrique et électronique (6),
une unité de commande (10),
les moyens de communication électrique et électronique (6) sont agencés pour envoyer des signaux du capteur de proximité à effet Hall (70) à l'unité de commande (10),
l'unité de commande (10) est équipée d'un processeur et de moyens de mémoire pour enregistrer des signaux provenant du capteur de proximité à effet Hall (70),
l'unité de commande (10) est équipée d'un logiciel de commande et/ou d'une interface utilisateur pour évaluer les états de la vanne de dérivation (80) à partir des signaux enregistrés provenant du capteur de proximité à effet Hall (70).

2. Dispositif de chauffage d'eau chaude (100) selon la revendication 1,
**caractérisé en ce que**
le module électronique (20) est agencé sur le corps de la vanne de répartition à trois voies (3).

3. Dispositif de chauffage d'eau chaude (100) selon la revendication 1,
**caractérisé en ce que**
le module électronique (20) fait partie de l'unité de commande (10).

4. Dispositif de chauffage d'eau chaude (100) selon l'une quelconque des revendications 1 à 3,
**caractérisé en ce que**
les moyens de communication électrique et électronique (6) comprennent un bus LIN local.
